# EUROPEAN PATENT APPLICATION

(11) **EP 4 636 238 A1**
(43) Date of publication of application: **22.10.2025**
(21) Application number: 24171283.5
(22) Date of filing: 19.04.2024
(51) Int. Cl.: F02D 41/00, F02D 41/10, F02D 41/14, F02D 41/18, F02B 37/18, F02B 39/10

(54) **INTERNAL COMBUSTION ENGINE, ARRANGEMENT, METHOD AND COMPUTER PROGRAM PRODUCT**

(71) Applicant: Innio Jenbacher GmbH & Co OG, 6200 Jenbach (AT)
(72) Inventor: HUBER, Johannes, 6233 Kramsach (AT); THALHAUSER, Josef, 83191 Nussdorf (DE)
(74) Representative: Torggler & Hofmann Patentanwälte - Innsbruck

(57) **Abstract**

Internal combustion engine (1) with an intake (2) for intaking air and/or an air-fuel-mixture, at least one compressor (4) for compressing a gas flow, an electric machine (6) for driving the at least one compressor (4), at least one control valve (7), and a controller (10) for controlling the electric machine (6) and the at least one control valve (7), wherein the at least one compressor (4) and the at least one control valve (7) are configured to directly or indirectly influence a mass flow (8) and/or an intake pressure (9) in the intake (2), wherein the controller (10) is configured to control the electric machine (6) in dependence on at least one command value for the at least one control valve (7).

## Description

The present invention relates to an internal combustion engine with an intake for intaking air and/or an air-fuel-mixture, at least one compressor for compressing a gas flow, an electric machine for driving the at least one compressor, at least one control valve, and a controller for controlling the electric machine and the at least one control valve, wherein the at least one compressor and the at least one control valve are configured to influence a mass flow and/or an intake pressure in the intake.

The invention further relates to an arrangement comprising such an internal combustion engine and a method and a computer program product for controlling such an internal combustion engine.

This type of internal combustion engine is designed to increase the mass of air and/or the air-fuel-mixture available for combustion in an engine system with piston-cylinder units of the internal combustion engine. Herein, the electric machine drives the at least one compressor to provide additional mass flow and/or additional pressure in the intake and/or the exhaust of the internal combustion engine. The increase in fluid mass flow and/or pressure is most relevant during engine load transients, particularly during rapid engine load transients. Engine power or load transients can occur around peaking applications with high engine load requirements as well as during rapid engine ramp ups or emergency starts, e.g. for hospitals or datacentres.

In most cases the electric machine is operated only temporarily during said transients and is switched off after a desired or reference engine load is reached. The control procedure for controlling of the electric machine is of key importance since bad timing or an unfavourable rate of change of operation of the electric machine can lead to a rapid drop or loss of intake pressure at the intake, in particular a boost pressure of the intake pressure. Furthermore, unfavourable pressure or load oscillations can occur. Drops or losses of intake pressure, in particular of the boost pressure, can further lead to an adverse loss and/or to adverse oscillations of engine power.

Unfortunately, the state of the art does not provide a solution to avoid this unfavourable behaviour.

Thus, the object of the present invention is to solve this problem with the provision of an internal combustion engine with which the intake pressure, in particular the boost pressure, and engine power can be maintained during and after transients.

This object is attained by the proposed internal combustion engine with an intake for intaking air and/or an air-fuel-mixture, at least one compressor for compressing a gas flow, an electric machine for driving the at least one compressor, at least one control valve, and a controller for controlling the electric machine and the at least one control valve, wherein the at least one compressor and the at least one control valve are configured to directly or indirectly influence a mass flow and/or an intake pressure in the intake, and wherein the controller is configured to control the electric machine in dependence on at least one command value for the at least one control valve.

The gas flow can be an air flow and/or an air-fuel-mixture flow.

It is also conceivable that the gas flow can comprise exhaust gas recirculation gas and/or reformed gas.

The at least one compressor can be arranged in an intake conduit upstream the engine system. In this case the compressor directly influences the mass flow and/or the intake pressure in the intake.

The at least one compressor can be arranged in the exhaust conduit downstream the engine system, preferably upstream a turbine of a turbo charger. In this case the compressor influences the mass flow and/or the intake pressure in the intake indirectly.

The at least one control valve can be arranged in the intake conduit upstream the engine system. In this case the control valve directly influences the mass flow and/or the intake pressure in the intake.

The at least one control valve can be arranged in the exhaust conduit downstream the engine system. In this case the at least one control valve influences the mass flow and/or the intake pressure in the intake indirectly.

One big advantage of the invention is that it improves the interaction of the at least one compressor, which is driven by the electric machine, with the engine system with piston-cylinder units such that any intake pressure losses, in particular boost pressure losses, and engine power losses are avoided.

This is particularly useful for situations after engine load transients, i.e. when a desired or reference engine load is reached such that the operation of the electric machine is no longer required. The present invention then enables a smooth transition from an activated state to a deactivated state, or at least decreased state, of operation of the electric machine and, thus, a decrease of additional mass flow or intake pressure provided by the at least one compressor.

Overall, the present invention allows for a smooth operation of the internal combustion engine, which entails an effective and efficient use of resources, in particular of the fuel, as well as long service times of components.

Another big advantage of the present invention is that it constitutes a simple yet effective mechanism that solves the problem stated above. The internal combustion engine can be operated to maintain the reference pressure in the intake and/or the reference engine power by utilizing the at least one control valve for controlling the electric machine without the need of complex control algorithms, a special design of the compressor, electric machine, or other components.

In this context, a main aspect of the invention is that basing a control of the at least one compressor on the at least one command value for the at least one control valve, in particular on the behaviour of the control valve in terms of its actual position and/or on a reference position, e.g. threshold value, and/or an actual gradient and/or a reference gradient of the position of the at least one control valve, allows for a self-contained control of the at least one compressor based on a single value (or relatively small number of values) of a quantity (or quantities) representative for the ability of the engine to stably maintain the current or desired power.

The intake of the internal combustion engine provides air and/or an air-fuel-mixture to an engine system with one or more piston-cylinder units.

The compressor driven by the electric machine can provide the additional mass flow and/or additional pressure to an intake conduit or to an exhaust conduit. In either case, the mass flow and/or intake pressure in the intake can be influenced.

The compressor driven by the electric machine can provide the additional mass flow and/or additional pressure either upstream or downstream of a second or additional compressor of a turbo charger.

The pressure generated by a turbo charger is preferably to be understood as the boost pressure.

The additional pressure can then be understood as the pressure on top of the boost pressure.

The at least one compressor can also provide the additional mass flow and/or additional pressure to an exhaust conduit, preferably upstream of a turbine of a turbo charger.

In preferred embodiments of the invention, the at least one command value for the at least one control valve is an actual value and/or a reference value of the position of the at least one control valve and/or an actual value and/or a reference value of the gradient of the position of the at least one control valve.

The actual value of the position of the at least one control valve and/or the reference value for the position of the at least one control valve, e.g. threshold value for the position of the at least one control valve, is or are preferably represented in percentage of the maximum flow rate through the control valve. For example, a value for the position of the at least one control valve of 10 % constitutes a flow rate of 10 % in relation to the maximum flow rate, e.g. in m³/s or kg/s.

It is also conceivable that the value for the position of the at least one control valve of e.g. 10 % represents the ratio of the opening area of the control valve cross-section to the full area of the control valve cross-section.

The gradient, in particular the actual gradient and/or the reference gradient, of the position of the control valve is preferably to be understood as the rate of change of the position of the at least one control valve.

It is also possible that the gradient of the position of the at least one control valve is understood as a rate of change of the flow rate through the control valve and/or a rate of change of the ratio of the opening area of the control valve cross-section to the full area of the control valve cross-section.

It is also possible that the controller controls the electric machine in dependence on a value of the mass reserve instead or in combination with the value of the position of the control valve.

A reference value of a parameter, e.g. a reference value of the position of the at least one control valve, a reference pressure in the intake, a reference engine power, or a reference compressor mass flow, is preferably to be understood as a desired or target value.

A reference value, e.g. for the position of the at least one control valve, can be interpreted either as a constant value or as a progression of a value, wherein the reference value can vary over time or in dependence on another parameter.

A reference value can be used for open-loop and closed-loop control, particularly for controlling the electric machine and/or the at least one control valve.

A reference value can alternatively or additionally constitute a threshold value, wherein certain action is triggered upon exceeding the threshold. For example, the electric machine for driving the at least one compressor could be switched off when the at least one control valve reaches a certain threshold position (threshold value).

A threshold value can be used to control the electric machine and/or the at least one control valve.

A threshold value, e.g. for the position of the at least one control valve, is preferably interpreted as a certain absolute or relative value, preferably wherein the threshold value is a constant value.

It is possible that more than one reference value, e.g. threshold value, for the position of the at least one control valve is used for controlling the electric machine.

In a preferred variant of the invention, the controller is configured to control the electric machine such that a reference engine power is reached, exceeded and/or maintained.

Preferably, the controller, is configured to control the electric machine and/or the at least one control valve using a closed-loop control routine, preferably based on the comparison of the actual intake pressure or actual boost pressure and a reference pressure in the intake or a reference boost pressure.

In another variant of the internal combustion engine, the closed-loop control routine is based on the comparison of an actual engine power and a reference engine power. Instead of engine power, also the engine speed or torque can be used for control.

Particularly advantageous embodiments of the invention are recited in the appendant claims.

In a preferred embodiment of the invention, the internal combustion engine comprises a bypass conduit for bypassing at least the at least one compressor, wherein the bypass conduit comprises a bypass valve, also called compressor bypass valve.

Preferably, at least one intercooler is arranged downstream the at least one compressor.

In an embodiment of the invention, the bypass conduit bypasses the electric machine, the compressor, and an intercooler for cooling the air and/or air-fuel-mixture.

In a particularly advantageous embodiment of the invention, the bypass valve is used as the at least one control valve.

Preferably, the controller is configured to control the electric machine and/or the at least one control valve in dependence on a mass reserve in the bypass conduit. The mass reserve can then be understood as the at least one command value.

The mass reserve is preferably to be understood as the mass of the gas, air and/or air-fuel-mixture in the bypass conduit, or at least in a section of the bypass conduit.

The mass reserve can serve to mitigate or compensate a change of operation of the electric machine during transients such that the reference pressure in the intake, in particular the boost pressure, and thus the engine power is maintained after the change of operation of the electric machine.

Expressed in other words, the electric machine is preferably kept in operation after a reference engine power is reached or exceeded until a specified mass reserve in the bypass conduit is reached, wherein the mass reserve can compensate the loss of the mass flow of the compressor after the operation of the electric machine will be reduced or switched off.

In a preferred embodiment of the invention, the internal combustion engine comprises a throttle valve, preferably arranged downstream of the at least one compressor.

Preferably, the throttle valve is used as the at least one control valve.

Preferably, the position of the throttle valve can be used by the controller as the at least one command value to control the electric machine.

In a particularly preferred embodiment of the invention, the controller is configured to control the electric machine in dependence on the intake pressure, in particular the boost pressure, and a reference pressure in the intake.

Preferably, a difference and/or a ratio of the intake pressure, in particular the boost pressure, and the reference pressure, e.g. the ratio of the actual boost pressure to the reference pressure in the intake, can be used by the controller to control the electric machine.

In a particularly preferred embodiment of the invention, the at least one compressor belongs to a turbo charger of the internal combustion engine.

Preferably, the internal combustion engine comprises only one compressor: the compressor of the turbo charger. In this case the electric machine drives both the compressor and the turbine and forms an electric turbocharger (e-turbo).

In an embodiment of the invention, the internal combustion engine comprises a wastegate valve, preferably arranged downstream of an engine system and bypassing a turbine of a turbo charger of the internal combustion engine.

In an embodiment of the invention, the wastegate valve is used as the at least one control valve.

Preferably, a position of the wastegate valve can be used by the controller as the at least one command value to control the electric machine.

In another embodiment of the invention, the internal combustion engine comprises the at least one compressor and a turbo charger comprising an additional compressor. In this case, the internal combustion engine comprises at least two compressors.

Preferably, the electric machine drives the at least one compressor which is separate to the additional compressor of the turbo charger.

The electric machine and the at least one compressor driven by said electric machine can be arranged upstream of the additional compressor of the turbo charger. With such arrangement, additional mass flow and/or additional pressure can be provided to the additional compressor such that the pressure generation by the additional compressor is increased, preferably such that the reference, e.g. threshold pressure, at the intake is reached.

The electric machine and the at least one compressor driven by said electric machine can be arranged downstream of the additional compressor of the turbo charger. With such arrangement, additional mass flow and/or additional pressure can directly be provided to the intake in addition to the mass flow and/or boost pressure generated by the additional compressor such that the reference pressure at the intake is reached.

In a preferred embodiment of the invention, the internal combustion engine comprises an e-compressor bypass conduit bypassing at least the electric machine and the at least one compressor.

Preferably, the e-compressor bypass conduit comprises at least one e-compressor bypass valve.

The e-compressor bypass conduit can further comprise an intercooler arranged downstream of the at least one compressor.

In a particularly preferred embodiment of the invention, the controller is configured to output a further command value to the electric machine, wherein the further command value is preferably a mass flow and/or power and/or speed and/or torque of the at least one compressor.

The controller can also be configured to output the further command value to a drive of the electric machine.

The further command value can also be a ratio of the intake pressure, in particular the boost pressure, and the reference pressure in the intake and/or a difference of the intake pressure, in particular the boost pressure, and the reference pressure in the intake.

The controller can be configured to switch off the electric machine when the position of the at least one control valve exceeds the reference value for the position of the at least one control valve, in particular a threshold value for the position of the at least one control valve.

The act of switching off the electric machine corresponds to a further command value of zero, wherein the further command value is provided to the electric machine.

Described in other words, the electric machine is being switched off or at least reduced in its operation after a reference engine power or load is reached only after the at least one command value for the at least one control valve, e.g. the bypass valve, reaches a certain value.

This can for instance be in that the bypass valve reaches a certain position and/or the bypass conduit contains a certain mass reserve, i.e. amount of air or air-fuel-mixture.

It is possible that the threshold value of the position of the control valve is specified to be 10 % or 35 %.

In a particularly preferred embodiment of the invention, the controller comprises a PI-controller for controlling the electric machine.

The PI-controller preferably compares the actual value of the position of the at least one control valve with the reference value for the position of the at least one control valve, e.g. with a threshold value for the position of the at least one control valve.

It is also conceivable that the PI-controller compares the actual gradient of the position of the at least one control valve with the reference gradient of the position of the at least one control valve, e.g. with a threshold value of the gradient of the position of the at least one control valve.

In a preferred embodiment, the controller configured to output the further command value to the electric machine comprises a PI-controller.

In the following, an operation of a particularly preferred embodiment of the invention comprising a turbo charger with an additional compressor is described exemplarily:
The mass flow and/or power and/or torque of the at least one compressor driven by the electric machine is increased up to its maximum by the controller, in particular using the PI-controller, while the value of the position of the bypass valve and/or the mass reserve in the bypass conduit is below the reference value of the position of the bypass valve and/or a reference value of the mass reserve during a power ramp-up of the internal combustion engine and while the engine system, and possibly a turbine of a turbo charger, is or are cold. After the internal combustion engine has reached the desired or reference engine power and while it is slowly heating up, the bypass valve opens to maintain the desired or reference pressure in the intake, in particular a desired boost pressure, and/or a reference engine power. At some point, the reference value for the position of the bypass valve is exceeded. Then, the controller reduces the mass flow and/or power and/or torque of the at least one compressor driven by the electric machine in order to keep the bypass valve at the desired opening position. The at least one compressor driven by the electric machine is shut down or reduced at some point when the further command value for the mass flow and/or power and/or torque reaches a very low value, which is preferably smaller than 5 %, particularly preferably smaller than 1 % of a rated maximum value.

In the following, an operation of another preferred embodiment of the invention with no additional compressor is described exemplarily:
The power and/or speed and/or torque of the at least one compressor, which is the compressor of a turbo charger, is increased by the controller, preferably using the PI-controller, while the value of the position of the bypass valve and/or the mass reserve in the bypass conduit is below the reference value of the position of the bypass valve and/or the reference value of the mass reserve during the power ramp-up of the internal combustion engine and while the engine system and the turbine of the turbo charger are still cold. After the internal combustion engine has reached the reference engine power and while it is slowly heating up, the bypass valve opens to maintain the reference pressure in the intake, in particular the boost pressure, and/or the reference engine power. At some point, the reference value for the position of the bypass valve and/or the threshold value for the position of the bypass valve is exceeded. Then, the controller reduces the power and/or speed and/or torque of the at least one compressor in order to keep the bypass valve at the desired opening position. The further command value, preferably the power command value, of the compressor driven by the electric machine moves to a negative value at some point to maintain the reference position of the bypass valve. This means that the electric machine is recuperating power and keeping the reference value for the position of the bypass valve and/or the reference value of the mass reserve at a defined low value such as 5 % or 1% of a maximum value.

Preferably, the bypass valve is actuated based on a pressure, in particular boost pressure, control-loop.

It is also conceivable that the power and/or speed of the electric machine could be used for actuation of the control valve instead of the intake pressure, in particular boost pressure.

It is also possible that feedforward control is applied from controlling the intake pressure, boost pressure and/or the engine power to controlling the electric machine, wherein the PI-controller is offset by the feedforward control or replaced by the feedforward control.

The invention, furthermore, comprises an arrangement comprising an internal combustion engine according to the invention and a generator for creating electrical energy mechanically, wherein the generator is driven by the internal combustion engine.

The present invention further comprises a method for controlling an internal combustion and/or an arrangement according to the invention, wherein the following steps are executed:
- directly or indirectly boosting the intake pressure with the electric machine until the reference pressure in the intake and/or the reference engine power or load is reached;
- controlling the electric machine in dependence on at least one command value for the at least one control valve.

The step of controlling the electric machine is preferably executed in dependence on the actual value of the position of the at least one control valve and/or the reference value, e.g. threshold value, for the position of the at least one control valve and/or the actual gradient of the position of the at least one control valve and/or the reference gradient of the position of the at least one control valve.

The reference pressure in the intake and/or the reference engine power or load can also be exceeded and/or maintained after it is reached.

In a preferred variant of the method, the method further comprises controlling the at least one control valve in dependence on a mass flow and/or power and/or speed and/or torque of the at least one compressor and/or in dependence on a ratio of the intake pressure, in particular the boost pressure, and a reference pressure in the intake and/or a difference of the intake pressure, in particular the boost pressure, and a reference pressure in the intake.

The invention, furthermore, comprises a computer program product for controlling an internal combustion and/or an arrangement according to the invention, wherein the computer program product comprises commands which cause an executing computer to perform the following:
- controlling the at least one control valve for directly or indirectly influencing a mass flow and/or an intake pressure, in particular a boost pressure, of the internal combustion engine;
- receiving or having stored at least one command value, preferably an actual value of a position of the at least one control valve and/or a reference value, e.g. threshold value, for the position of the at least one control valve and/or an actual gradient of the position of the at least one control valve and/or a reference gradient of the position of the at least one control valve;
- controlling an electric machine configured to drive a compressor of the internal combustion engine in dependence on the at least one command value, preferably in dependence on the actual value of the position of the at least one control valve and/or the reference value for the position of the at least one control valve and/or the actual gradient of the position of the at least one control valve and/or the reference gradient of the at least one control valve.

Further details and advantages of the present invention will be described by means of the figures and their specific description hereinafter, wherein:
- Figs. 1-4: show schematic drawings of different embodiments of the internal combustion engine according to the invention,
- Fig. 5a-5c: show simulation parameters of an arrangement comprising an internal combustion engine according to the state of the art,
- Fig. 6a-6c: show simulation parameters of an embodiment of the arrangement comprising an embodiment of the internal combustion engine according to the invention,
- Fig. 7a-7c: show simulation parameters of an embodiment of the arrangement comprising an embodiment of the internal combustion engine,
- Fig. 8: shows a control diagram of an embodiment of the internal combustion engine,
- Fig. 9: shows a control diagram of an embodiment of the internal combustion engine,
- Fig. 10: shows an electric plan of an embodiment of the arrangement comprising the embodiment of Fig. 11 and
- Fig. 11: shows an electric plan of an embodiment of the arrangement comprising the embodiment of Fig. 12.

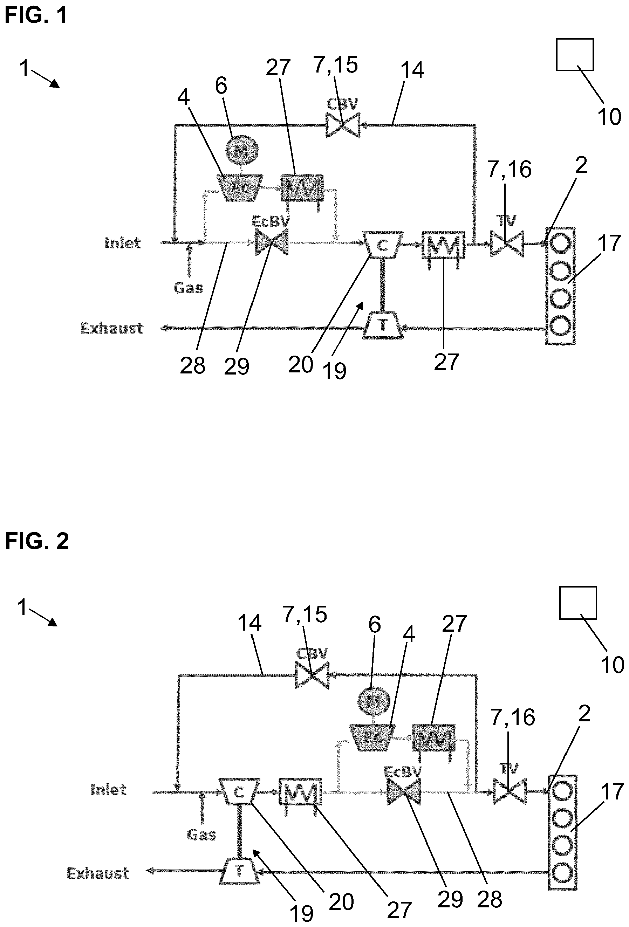

Fig. 1 shows a schematic drawing of an embodiment of the internal combustion engine 1 with an intake 2 for intaking air and/or an air-fuel-mixture into an engine system 17, at least one compressor 4 for compressing a gas flow, an electric machine 6 for driving the at least one compressor 4, at least one control valve 7, and a controller 10 for controlling the electric machine 6 and the at least one control valve 7, wherein the at least one compressor 4 is configured to directly or indirectly influence a mass flow 8 and/or an intake pressure 9 in the intake 2, wherein the controller 10 is configured to control the electric machine 6 in dependence on at least one command value.

This embodiment comprises a turbo charger 19 comprising an additional compressor 20 and a turbine.

When the least one compressor 4 driven by the electric machine 6 is separate from the additional compressor 20 of a turbo charger 19, the at least one compressor 4 can be referred to as e-compressor.

In this embodiment, the at least one compressor 4 driven by the electric machine 6 is arranged upstream of the additional compressor 20 of the turbo charger 19.

This embodiment further comprises a bypass conduit 14 for bypassing at least the at least one compressor 4, wherein the bypass conduit 14 comprises a bypass valve 15.

Furthermore, this embodiment comprises a throttle valve 16, preferably arranged downstream of the at least one compressor 4.

In this embodiment, the bypass valve 15 and/or the throttle valve 16 can be used as the at least one control valve 7.

In a preferred variant, the bypass valve 15 is used as the at least one control valve 7, preferably as the only control valve 7.

It is possible that the controller 10 is configured to control the electric machine 6 and/or the at least one control valve 7, in particular the bypass valve 15, in dependence on a mass reserve in the bypass conduit 14.

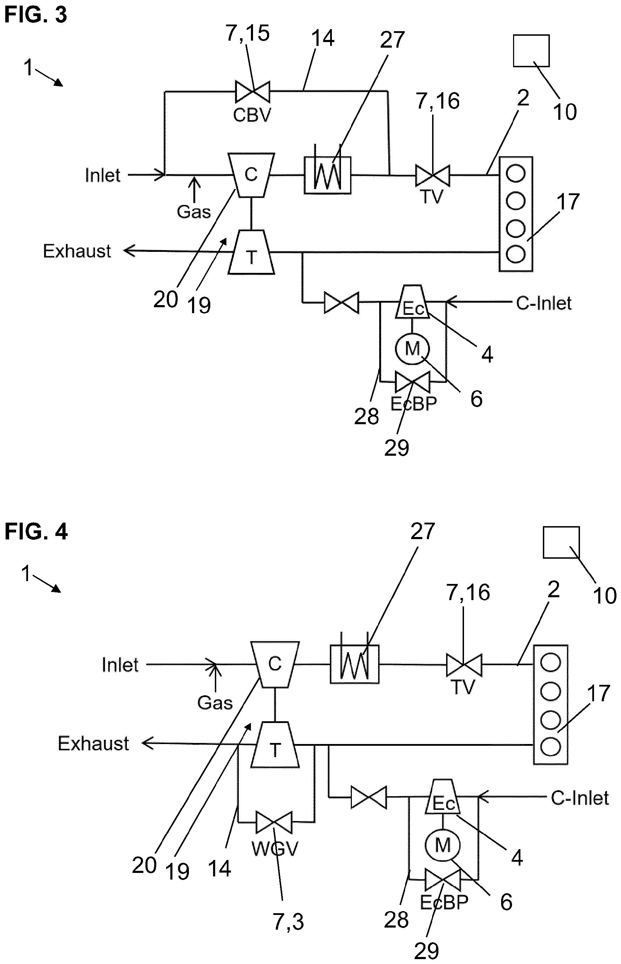

This embodiment or other embodiments of the internal combustion engine 1 can further comprise a wastegate valve 3 (e.g. see Fig. 4) for bypassing the turbine of the turbo charger 19.

The wastegate valve 3 can be used as the at least one control valve 7.

This embodiment of the internal combustion engine 1 further comprises an intercooler 27 for cooling the air and/or air-fuel-mixture, preferably wherein the intercooler 27 is arranged downstream of the additional compressor 20 of the turbo charger 19.

This embodiment further comprises another intercooler 27 for cooling the air and/or air-fuel-mixture, wherein said intercooler 27 is arranged after the at least one compressor 4.

This embodiment comprises an e-compressor bypass conduit 28 for bypassing at least the at least one compressor 4, preferably also for bypassing the intercooler 27 arranged downstream of the at least one compressor 4.

This embodiment further comprises an e-compressor bypass valve 28 in the e-compressor bypass conduit 28.

In the descriptions of the exemplary embodiments shown in the following figures, priority will be given to the differences in respect to the first exemplary embodiment in order to avoid repetition. Otherwise, the above description of the first exemplary embodiment also applies, as far as applicable, to the exemplary embodiments described below.

Fig. 2 shows a schematic drawing of an embodiment of the internal combustion engine 1, wherein the at least one compressor 4 driven by the electric machine 6 is arranged downstream of the additional compressor 20 of the turbo charger 19.

Here, the at least one compressor 4 provides additional mass flow and/or pressure to the intake conduit, such that the at least one compressor 4 directly influences the mass flow 8 and/or the intake pressure 9 in the intake 2.

Fig. 3 and 4 show schematic drawings of preferred embodiments of the internal combustion engine 1, wherein the at least one compressor 4 driven by the electric machine 6 is arranged downstream of the engine system 17 and upstream of the turbine of the turbo charger 19.

Here, the mass flow 8 and/or the intake pressure 9 in the intake is influenced indirectly.

In both cases the compressor 4 is charged via an inlet and bypassed by an e-compressor bypass conduit 28 comprising an e-compressor bypass valve 29.

The embodiment of Fig. 3 comprises a bypass conduit 14 in the intake conduit upstream the engine system 17, wherein the bypass conduit 14 comprises the control valve 7 or bypass valve 15.

In the embodiment of Fig. 4, the bypass conduit 14 is a wastegate conduit bypassing the turbine of the turbo charger 19 downstream the engine system 17, wherein the wastegate conduit comprises a wastegate valve 3 which serves as at least one control valve 7.

It is also possible that the bypass conduit 14 is arranged in the exhaust conduit downstream the engine system 17 bypassing the at least one compressor 4 and the e-compressor bypass conduit 28 as well as the turbine of the turbo charger 19.

It is also possible that the embodiments of Figs. 3 and 4 can be combined to comprise more than one control valve 7 in both the intake conduit and exhaust conduit.

It is furthermore possible that a throttle valve 16 is used as at least one control valve 16.

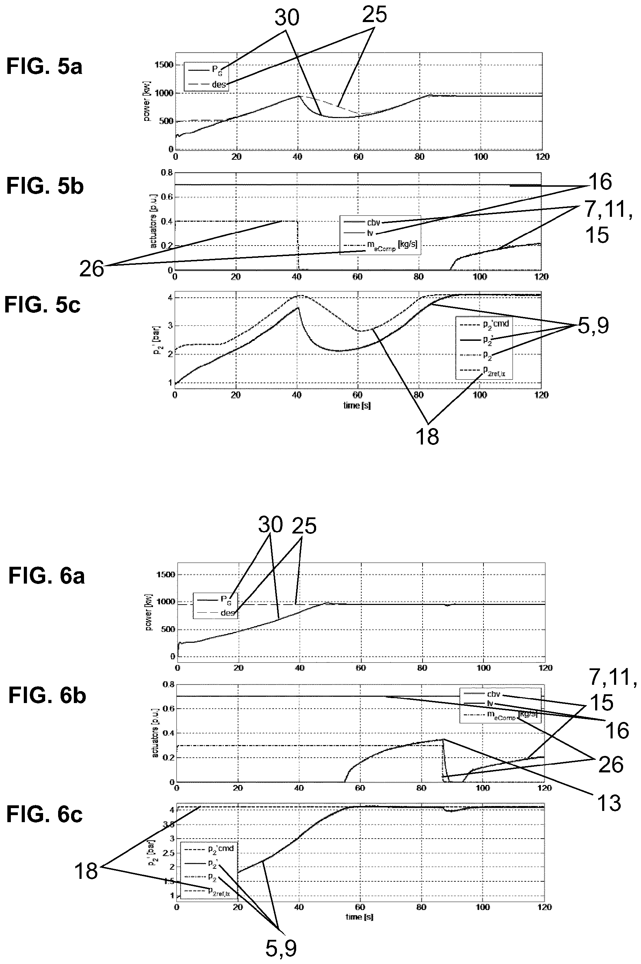

Fig. 5a-5c show simulation parameters of an arrangement comprising an internal combustion engine according to the state of the art, wherein all stated figures correspond to each other.

Fig. 5a shows the reference engine power 25, represented by the desired power of the generator 24, and the actual engine power 30, represented by the actual power of the generator 24.

Fig. 5b shows the progression of the mass flow 26 of the at least one compressor 4, the progression of the position of the throttle valve 16 and the progression of the position 11 of the bypass valve 15 over time. Fig. 5c shows the progression of the intake pressure 9, in particular the boost pressure 5, as well as the progression of the reference pressure 18 in the intake 2 of the internal combustion engine 1.

Looking at the stated figures, the engine power 30 (Fig. 5a) is being increased by means of the mass flow 26 of the at least one compressor 4 (Fig. 5c), wherein the mass flow 26 is commanded to a constant value of about 0.4 kg/s. The reference engine power 25 is reached and maintained until an operation time of about 40 s, where the electric machine 6 driving the at least one compressor 4 is switched off, i.e. the mass flow 26 of the at least one compressor 4 is commanded to value zero. The deactivation of the at least one electric machine 6 causes the engine power 30 to drop below the desired or reference engine power 25. Only at an operation time of about 70 s, the reference engine power 25 is reached again.

Furthermore, the desired or reference pressure 18 in the intake 2 cannot be reached until an operation time of about 90 s. It is deceivable from Fig. 5c, however, that the position 11 of the control valve 7, i.e. the bypass valve 15, causes the intake pressure 9, in particular the boost pressure 5, to reach the reference pressure 18 in the intake 2. This illustrates that in this embodiment of the state of the art, the electric machine 6 is operated independent on a control valve 7 and switched off too early such that an undesired loss in engine power occurs.

Fig. 6a-6c show simulation parameters of an embodiment of the arrangement 23 comprising an embodiment of the internal combustion engine 1 according to the invention, wherein the loss of engine power 30 is avoided. Fig. 6a-6c correspond with each other and comprise the same parameters as Fig. 5a-5c.

Herein, the mass flow 26 of the at least one compressor 4, the position of the throttle valve 16 and/or the position 11 of the bypass valve 15 can be used by the controller 10 for controlling the electric machine 6.

Fig. 6a shows that the controller 10 is configured to control the electric machine 6 such that a reference engine power 25 is reached and/or maintained. Expressed in other words, the invention entails that the engine power 30 can be maintained at the level of the reference engine power 25 after the electric machine 6 has been switched off at an operation time of about 87 s. Therein, the reduction of the mass flow 26 of the at least one compressor 26 represents the deactivation of the electric machine 6.

It is deceivable from Fig. 6b and 6c that the position 11 of the bypass valve 15 used as the control valve 7 is increased after the intake pressure 9, in particular the boost pressure 5, reaches the reference pressure 18 such that the intake pressure 9, in particular the boost pressure 5, is maintained.

Herein, the electric machine 6 is controlled in dependence on the actual value of the position 11 of the bypass valve 15 and/or a threshold value of the position 13 of the bypass valve 15, wherein the threshold value of the position 13 is set to 35 %.

In particular, the electric machine 6 is commanded to turn off when the position of the bypass valve 15 reaches the threshold value for the position 13.

In this embodiment, the electric machine 6 is configured to being commanded to either on or off.

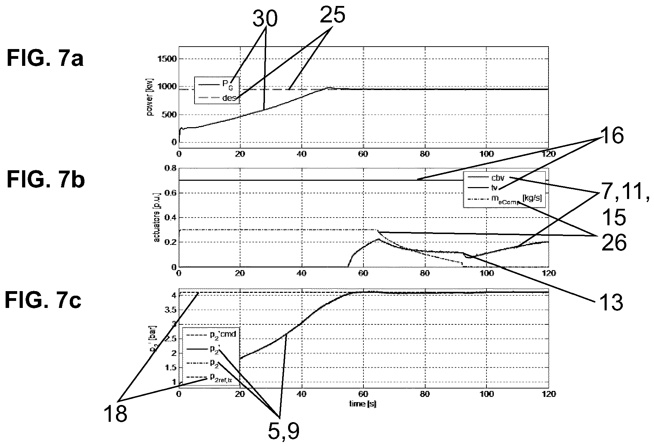

Fig. 7a-7c show simulation parameters of another embodiment of the arrangement comprising an embodiment of the internal combustion engine 1, wherein the engine power 30 is maintained at the reference engine power 25 (Fig. 7a). Fig. 7a-7c correspond with each other and comprise the same parameters as Fig. 5a-5c and Fig. 6a-6c.

This embodiment differs from the embodiment shown in Fig. 6a-6c in that there is not only on- and off-commands, but the position 11 of the control valve 7 is used to control the electric machine 6, in particular the mass flow 26 and or the torque of the at least one compressor 4 driven by the electric machine 6.

It is also possible that the electric machine 6 is controlled in dependence on the actual gradient and/or at the reference gradient of the position 11 of the control valve 7, in particular of the bypass valve 15.

Instead of or in addition to the mass flow 26 of the at least one compressor 4, also the power and/or speed and/or torque of the at least one compressor 4 can be used to control the electric machine 6.

It is also possible that the electric machine 6 can be controlled using the intake pressure 9, in particular the boost pressure 5, and the reference pressure 18 in the intake 2, preferably wherein a ratio and/or a difference of said intake pressure 9, in particular of said boost pressure 5, and the reference pressure 18 in the intake 2 is used.

Fig. 7b shows that the electric machine 6 is being controlled by the controller 10 in dependence on the actual value of the position 11 of the bypass valve 15 and a threshold value of the position 13 of the bypass valve 15, wherein the threshold value of the position 13 is set to about 10 %. This leads to a gradually reduction of the mass flow 26 of the e-compressor 4 via the command of the PI-controller 22 in order to maintain the position 11 of the bypass valve 15 at its reference or threshold value 13.

Herein, the mass flow 26 of the at least one compressor 4 has reached a reference value or a threshold value of the mass flow 26, e.g. when the mass flow 26 is 0.05 kg/s or less.

It is deceivable from Fig. 7b and 7c that the position 11 of the bypass valve 15, which is used as the control valve 7, is increased after the intake pressure 9, in particular the boost pressure 5, reaches the reference pressure 18 such that the intake pressure 9, in particular the boost pressure 5, is maintained.

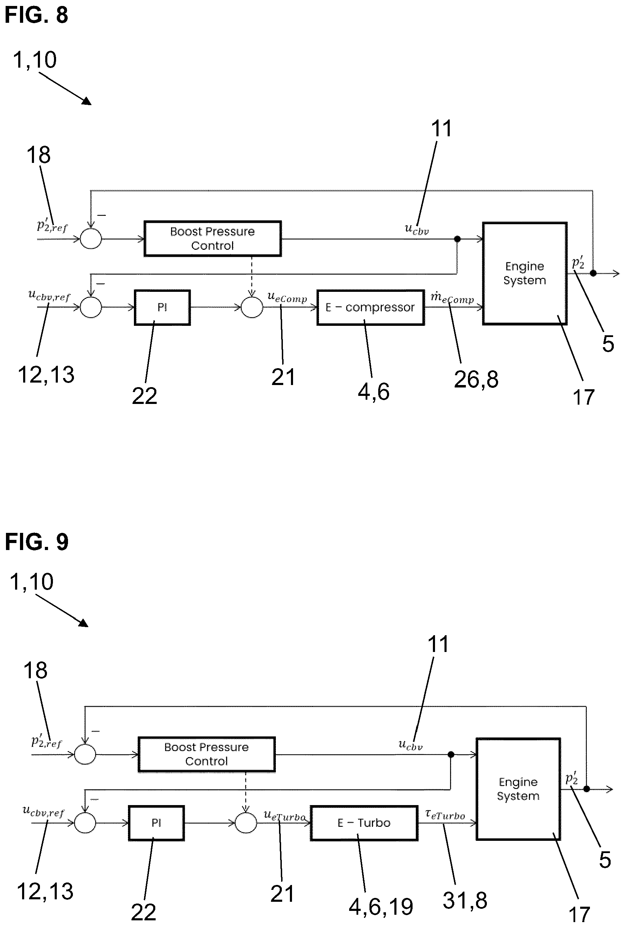

Fig. 8 shows a control diagram of an embodiment of the internal combustion engine 1, which represents the actions of the controller 10.

This embodiment comprises the at least one compressor 4 driven by the electric machine 6 as well as a turbo charger 19 with an additional compressor 20 (not shown).

The controller 10 of the embodiment shown in Fig. 8 comprises a PI-controller 22 for controlling the electric machine 6.

From Fig. 8 it is deceivable that the controller 10 is configured to control the electric machine 6 in dependence on the intake pressure 9, in particular the boost pressure 5, and the reference pressure 18, preferably in dependence on a ratio and/or difference of the intake pressure 9, in particular the boost pressure 5, and the reference pressure 18.

It is furthermore conceivable that the controller 10 is configured to output a further command value 21 to the electric machine 6, wherein the further command value 21 is preferably for a mass flow 26 and/or power and/or speed and/or torque of the at least one compressor 4.

The further command value 21 can further constitute a ratio of the intake pressure 9, in particular the boost pressure 5, and the reference pressure 18 in the intake 2 and/or a difference of the intake pressure 9, in particular the boost pressure 5, and the reference pressure 18 in the intake 2.

Correspondingly to the block diagram of Fig. 8, the internal combustion engine 1 can exemplarily be operated as follows: The mass flow 26 and/or power and/or torque of the at least one compressor 4 driven by the electric machine 6 is increased up to its maximum by the controller 10, in particular using the PI-controller 22, while the value of the position 11 of the bypass valve 15 and/or a mass reserve in the bypass conduit 14 is below the reference value of the position 12, e.g. the threshold value of the position 13 of the bypass valve 15, and/or a reference value of the mass reserve during the engine power 30 ramp-up of the internal combustion engine 1 and while the engine system 17 and a turbine of the turbo charger 19 (not shown) are cold. After the internal combustion engine 1 has reached the desired or reference engine power 25 and while it is slowly heating up, the bypass valve 15 opens in order to maintain the desired or reference pressure 18 in the intake 2 and/or reference engine power 25. At some point, the reference value for the position 12 of the bypass valve 15, e.g. the threshold value for the position 13 of the bypass valve 15, is exceeded. Then, the controller 10 reduces the mass flow 26 and/or power and/or torque of the at least one compressor 4 driven by the electric machine 6 to keep the bypass valve 15 at the desired or reference value for the position 12, e.g. at the threshold value of the position 13. The electric machine 6 is shut down at some point when the further command value 21 for the mass flow 26 and/or power and/or torque reaches a very low value such as 5 % or 1 %.

Fig. 9 shows a control diagram of an embodiment of the internal combustion engine 1, wherein the at least one compressor 4 belongs to a turbo charger 19. The diagram represents the actions of the controller 10.

When the at least one compressor 4 belongs to a turbo charger 19, a torque of the turbo charger 31 is preferably used instead of the mass flow 26 for controlling the electric machine 6.

Correspondingly to the block diagram of Fig. 9, the internal combustion engine 1 can exemplarily be operated as follows: The power and/or speed and/or torque of the at least one compressor 4 of the turbo charger 19 is increased by the controller 10, preferably using the PI-controller 22, while the value of the position 11 of the bypass valve 15 and/or the mass reserve in the bypass conduit 14 is below the reference value of the position 12 of the bypass valve 15 and/or the reference value of the mass reserve during the power ramp-up of the internal combustion engine 1 and while the engine system 17 and the turbine of the turbo charger 19 are cold. After the internal combustion engine 1 has reached the desired or reference engine power 25 and while it is slowly heating up, the bypass valve 15 opens in order to maintain the desired or reference pressure 18 in the intake 2 and/or reference engine power 25. At some point, the reference value for the position 12 of the bypass valve 15, e.g. the threshold value for the position 13 of the bypass valve 15, is exceeded. Then, the controller 10 reduces the power and/or speed and/or torque of the at least one compressor 4 in order to keep the bypass valve 15 at the desired reference value for the position 12, e.g. at the threshold value for the position 13. The further command value 21, preferably the engine power command value of the compressor 4 driven by the electric machine 6, moves to a negative value to maintain the reference value for the position 12, e.g. the threshold value for the position 13 of the bypass valve 15. This means that the electric machine 6 is recuperating power and keeping the position 11 of the bypass valve 15 and/or the reference value of the mass reserve of the bypass conduit 14 at a defined low value such as 5 % or 1 %.

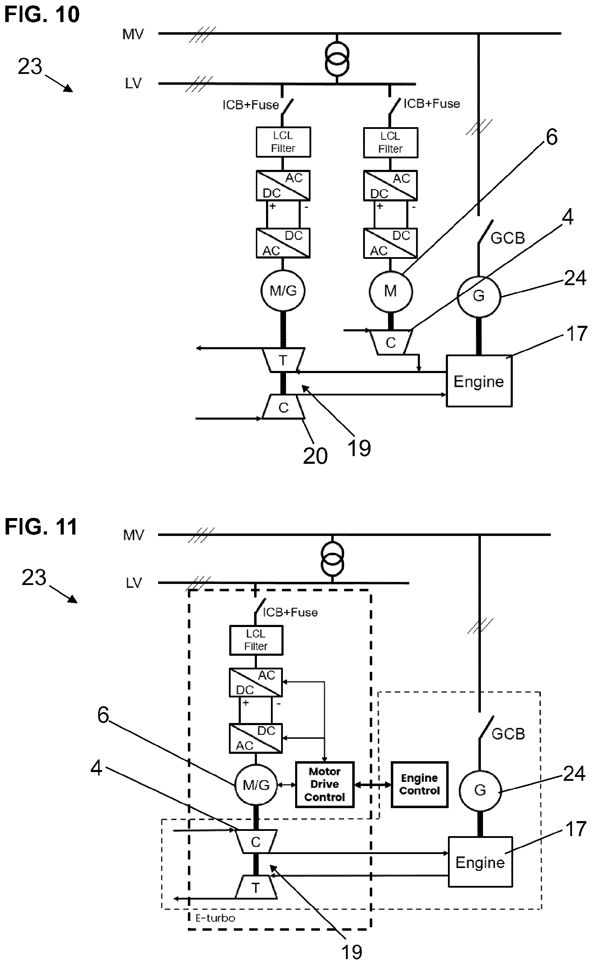

Fig. 10 shows an electric plan of an embodiment of the arrangement 23 comprising the embodiment of the internal combustion engine 1 of Fig. 8, wherein the at least one compressor 4 driven by the electric machine 6 is arranged downstream of the engine system 17 and upstream of the turbine of the turbo charger 19 comprising an additional compressor 20.

With this configuration, additional mass flow 26 and/or additional pressure is provided to the exhaust conduit, in particular to the turbine of the turbo charger 19, such that the additional compressor 20 indirectly boosts the intake pressure 9 in the intake 2 of the engine system 17 of the internal combustion engine 1.

Fig. 11 shows an electric plan of an embodiment of the arrangement 23 comprising the embodiment of Fig. 9, wherein the at least one compressor 4 belongs to the turbo charger 19.

When the at least one compressor 4 is the compressor of a turbo charger 19, the at least one compressor 4 can be referred to as e-turbo.

### List of references:

- 1: internal combustion engine
- 2: intake
- 3: wastegate valve
- 4: compressor
- 5: boost pressure
- 6: electric machine
- 7: control valve
- 8: mass flow (in the intake)
- 9: intake pressure
- 10: controller
- 11: (actual value of the) position
- 12: reference value for the position
- 13: threshold value for the position
- 14: bypass conduit
- 15: bypass valve
- 16: throttle valve
- 17: engine system
- 18: reference pressure (in the intake)
- 19: turbo charger
- 20: additional compressor
- 21: further command value
- 22: PI-controller
- 23: arrangement
- 24: generator
- 25: reference engine power
- 26: mass flow (of the compressor)
- 27: intercooler
- 28: e-compressor bypass conduit
- 29: e-compressor bypass valve
- 30: engine power
- 31: torque of turbo charger

## Claims

1. Internal combustion engine (1) with an intake (2) for intaking air and/or an air-fuel-mixture, at least one compressor (4) for compressing a gas flow, an electric machine (6) for driving the at least one compressor (4), at least one control valve (7), and a controller (10) for controlling the electric machine (6) and the at least one control valve (7), wherein the at least one compressor (4) and the at least one control valve (7) are configured to directly or indirectly influence a mass flow (8) and/or an intake pressure (9) in the intake (2), **characterized in that** the controller (10) is configured to control the electric machine (6) in dependence on at least one command value for the at least one control valve (7).

2. Internal combustion engine (1) according to claim 1, wherein the at least one command value for the at least one control valve (7) is an actual value of the position (11) of the at least one control valve (7) and/or a reference value of the position (12) of the at least one control valve (7) and/or an actual gradient of the position of the at least one control valve (7) and/or a reference gradient of the at least one control valve (7) .

3. Internal combustion engine (1) according to claim 1 or 2, wherein the internal combustion engine (1) comprises a bypass conduit (14) for bypassing at least the at least one compressor (4), wherein the bypass conduit (14) comprises a bypass valve (15), preferably wherein the bypass valve (15) is used as the at least one control valve (7).

4. Internal combustion engine (1) according to claim 3, wherein the controller (10) is configured to control the electric machine (6) and/or the at least one control valve (7) in dependence on a mass reserve in the bypass conduit (14).

5. Internal combustion engine (1) according to one of the preceding claims, wherein the internal combustion engine (1) comprises a throttle valve (16), preferably arranged downstream of the at least one compressor (4), and/or a wastegate valve (3), preferably arranged downstream of an engine system (17) of the internal combustion engine (1) .

6. Internal combustion engine (1) according to claim 5, wherein the throttle valve (16) and/or the wastegate valve (3) is or are used as the at least one control valve (7).

7. Internal combustion engine (1) according to one of the preceding claims, wherein the controller (10) is configured to control the electric machine (6) in dependence on the intake pressure (9), in particular a boost pressure (5) of the intake pressure (9), and a reference pressure (18) in the intake (2), preferably a ratio and/or difference of the intake pressure (9), in particular the boost pressure (5), and the reference pressure (18) in the intake (2).

8. Internal combustion engine (1) according to one of the preceding claims, wherein the at least one compressor (4) belongs to a turbo charger (19) of the internal combustion engine (1).

9. Internal combustion engine (1) according to one of the preceding claims, wherein the internal combustion engine (1) comprises a turbo charger (19) comprising an additional compressor (20).

10. Internal combustion engine (1) according to one of the preceding claims, wherein the controller (10) is configured to output a further command value (21) to the electric machine (6), wherein the further command value (21) is preferably a mass flow (26) and/or power and/or speed and/or torque of the at least one compressor (4) and/or a ratio of the intake pressure (9), in particular a boost pressure (5) of the intake pressure (9), and a reference pressure (18) in the intake (2) and/or a difference of the intake pressure (9), in particular the boost pressure (5), and the reference pressure (18) in the intake (2).

11. Internal combustion engine (1) according to one of the claims 2 to 10, wherein the controller (10) is configured to switch off the electric machine (6) when the position (11) of the at least one control valve (7) exceeds the reference value for the position (12) of the at least one control valve.

12. Internal combustion engine (1) according to one of the preceding claims, wherein the controller (10) comprises a PI-controller (22) for controlling the electric machine (6) .

13. Arrangement (23) comprising an internal combustion engine (1) according to one of the preceding claims and a generator (24) for creating electrical energy, wherein the generator (24) is driven by the internal combustion engine (1).

14. Method for controlling an internal combustion engine (1) according to one of claims 1 to 12 or an arrangement (23) according to claim 13, wherein the following steps are executed:
- directly or indirectly boosting the intake pressure (9) with the electric machine (6) until the reference pressure (18) in the intake (2) and/or a reference engine power (25) is reached;
- controlling the electric machine (6) in dependence on the at least one command value for the at least one control valve (7), preferably in dependence on the actual value of the position (11) of the at least one control valve (7) and/or the reference value for the position (12) of the at least one control valve (7) and/or the actual gradient of the position of the at least one control valve (7) and/or the reference gradient of the position of the at least one control valve (7).

15. Method according to claim 14, wherein the method further comprises controlling the at least one control valve (7) in dependence on a mass flow (26) and/or power and/or speed and/or torque of the at least one compressor (4) and/or in dependence on a ratio and/or difference of the intake pressure (9), in particular the boost pressure (5), and a reference pressure (18) in the intake (2).

16. Computer program product for controlling an internal combustion engine (1) according to one of claims 1 to 12 and/or an arrangement (23) according to claim 13, wherein the computer program product comprises commands which cause an executing computer to perform the following:
- controlling the at least one control valve (7) for directly or indirectly influencing a mass flow (8) and/or an intake pressure (9) in an intake (2), in particular a boost pressure (5) of the intake pressure (9), of the internal combustion engine (1);
- receiving or having stored the at least one command value for the at least one control valve (7), preferably an actual value of a position (11) of the at least one control valve (7) and/or a reference value for the position (12) of the at least one control valve (7) and/or an actual gradient of the position of the at least one control valve (7) and/or a reference gradient of the at least one control valve (7) ;
- controlling an electric machine (6) configured to drive at least one compressor (4) of the internal combustion engine (1) in dependence on the at least one command value.
